**Europäisches Patentamt**

(19) **European Patent Office**

**Office européen des brevets**

(11) Publication number: **0 021 832**

**A1**

(12) # EUROPEAN PATENT APPLICATION

(21) Application number: **80302136.9**

(22) Date of filing: **25.06.80**

(51) Int. Cl.³: **F 16 K 17/194**

(30) Priority: **26.06.79 PH 572079**
**21.11.79 AU 53051/79**
**07.02.80 US 120077**

(43) Date of publication of application:
**07.01.81 Bulletin 81/1**

(84) Designated Contracting States:
**AT BE CH DE FR GB IT LI LU NL SE**

(71) Applicant: **Kuykendall, John R.**
**122 c.c. Santos Street B.F. Homes**
**Paranaque Metro Manila(PH)**

(72) Inventor: **Kuykendall, John R.**
**122 c.c. Santos Street B.F. Homes**
**Paranaque Metro Manila(PH)**

(74) Representative: **Thomson, Roger Bruce et al,**
**POLLAK MERCER & TENCH High Holborn House 52-54**
**High Holborn**
**London WC1V 6RY(GB)**

(54) **Vacuum breaker and pressure relief valve for storage tanks.**

(57) The valve includes an intake check valve (30,110) and an exhaust check valve (70, 120) to allow air (via 45) to enter a tank from which fuel is being withdrawn by a pump while preventing air and fuel vapour from leaving the tank except during the filling thereof. The check valves comprise circular discs (110,120) which can move upwards and downwards within cylindrical bores. In use, the invention permits a gasoline pump to operate without an opposed load caused by a vacuum within the tank which is being emptied, while preventing loss of fuel and pollution except when the tank is being filled.

FIG.2.

- 1 -

## VACUUM BREAKER AND PRESSURE RELIEF VALVE FOR STORAGE TANKS

### DESCRIPTION

This invention relates to a valve which is designed for use with vent pipes of storage tanks for fluids, especially fuel storage tanks. Such tanks are conventionally attached to pumps which pump the fuel stored in the tank for delivery to a customer. If the tank is not vented to allow outside air to enter, a vacuum develops in the tank as fuel is withdrawn therefrom. As more and more fuel is pumped out of the tank, the magnitude of the vacuum increases and thus the pump must operate against an ever-increasing load. Such a load results in a reduction in the service life of the pump and additionally results in a lessening of the rate of fuel delivery from the pump.

Thus, it is conventional practice to vent a fuel storage tank to the atmosphere by means of a vent pipe which can allow air to enter the tank during the period when fuel is being withdrawn therefrom by the pump. However, the use of a vent pipe alone opens the interior of the tank to the atmosphere at all times.

Such fuels as gasoline have a high volatility and thus gasoline in a storage tank can easily enter a low pressure vapour phase. In the event that a vent pipe alone is used to vent a storage tank which contains gasoline or some other volatile fuel, the gasoline in the low pressure vapour phase will be free to leave the storage tank through the vent pipe. This phenomenon not only results in a loss of gasoline from the tank to the atmosphere, but also allows toxic hydrocarbons to pollute the atmosphere adjacent to the vent pipe. This phenomenon is particularly acute where the storage tank is buried underground and a long vent pipe is used to vent the storage tank to the atmosphere. When such a long vent pipe is used, a high stack draught is developed which causes the gasoline in the low pressure vapour phase to be sucked positively out of the storage tank.

It would thus be desirable to provide a device which will allow the storage tank to be vented to the atmosphere during a withdrawal of fuel therefrom by a pump, but which would also prevent such venting when the pump is not in use, in order to reduce pollution problems and loss of fuel to the atmosphere.

It is thus an object of this invention to provide a device which can be attached to the vent pipe that vents a storage tank for fuels and the like to the atmosphere during withdrawal of the contents of the tank, while preventing such venting when the tank is not in the process of being emptied. Furthermore, it is an object of the invention to provide such a device which has a high resistance to the corrosive action of the gases acting upon it, so as to have a long service life. A still further object of the invention is to provide a device of this type which is inexpensive to manufacture and which is simple in operation so as to reduce maintenance costs.

In accordance with the invention there is provided a valve for use with an air vent pipe of a storage tank which contains fluid in the liquid phase and the low pressure vapour phase, the valve being arranged to open the vent pipe when the tank is being filled and emptied while keeping the vent pipe closed at other times in order to permit the liquid fluid in the tank to be drawn off and replenished and to prevent the gaseous fluid from escaping at other times, the valve comprising: a housing with an interior and an exterior, the housing being securable to the vent pipe in a manner such that the pipe communicates with the interior of the housing; an intake check valve communicating with the interior of the housing, the intake check valve operating in a manner such that air is permitted to enter the interior of the housing through the intake check valve but is prevented from leaving the interior of the housing through the intake check valve; and an exhaust check valve communicating with the interior of the housing, the exhaust check valve operating in a manner such that gas which exceeds a predetermined threshold pressure is permitted to leave the interior of the housing through the exhaust check valve, but gas of a pressure less than the predetermined threshold pressure is prevented from leaving the interior of the housing through the exhaust check valve and air is prevented from entering the interior of the housing through the exhaust check valve.

An important feature is the use of two check valves which operate in opposite directions. The intake check valve is designed to allow air to enter the tank through the vent pipe when the pressure inside the tank is reduced by operation of the pump, while preventing air from so entering when the pump is not in use. The exhaust check valve on the other hand allows the interior of the tank to be vented to the atmosphere so as to allow the tank to be filled, while preventing such venting when the tank is not being filled. Although the valve does allow toxic hydrocarbons to escape to the atmosphere during the filling process, such filling of the storage tank is relatively

- 4 -

infrequent and thus the loss of fuel and the pollution released to the atmosphere is relatively low.

A preferred embodiment of valve in accordance with the present invention will now be described by way of example and with reference to the accompanying drawing, in which:

Fig. 1 is a perspective view of the preferred embodiment of valve in accordance with the invention;

Fig. 2 is a cross-sectional view of the valve taken along the line 2-2 of Fig. 1; and

Fig. 3 is a side view of the valve installed in a vent pipe.

In all the Figures like elements are indicated by like reference numerals regardless of the view in which the elements appear. A vertically elongated hollow cylindrical housing 10 has an interior 2, an annular peripheral flange 20 located near the top of the housing, and exterior threads 3 extending upwardly from the flange 20 to the top of the housing 10. At the bottom of the housing an annular peripheral valve seat 30 formed by an inturned radial wall of the housing constricts the diameter of the housing, and a hollow vertical tubular portion 40 extends downwardly from the interior periphery of the valve seat 30. The top end 15 of the housing 10 and the bottom end 45 of the tubular portion 40 are open to the outside. A generally J-shaped pipe 50 extends radially outwards from the housing 10 and then upwards, parallel to the housing 10. The interior 60 of this pipe 50 communicates with the interior 2 of the housing 10. At the top of the pipe 50 there is an outturned flange 70 which constitutes an annular valve seat extending horizontally outwards. The periphery of the flange seat 70 is extended upwards as a hollow, cylindrical and vertically elongated tube 80. Tube 80 has its top end closed off by a circular plate 100, and has perforations 90

- 5 -

in its cylindrical wall.

An intake check valve disc 110 is located inside the interior 2 of the housing 10 adjacent to the valve seat 30. The disc 110 is circular in shape, and has a diameter approximately 4.75 mm less than the internal diameter of the interior 2 of the housing 10. Thus, the disc 110 can move upwards and downwards within the interior 2 of the housing 10 under the influence of the forces acting upon it. In the event that the pressure at the top end 15 of the housing 10 is reduced because fuel is being withdrawn from the interior of a storage tank, the reduced pressure causes the disc 110 to lift upwards off its valve seat 30. As a result of the clearance between the peripheral edge of the disc 110 and the surrounding housing, air can be drawn into the lower end 45 of the tubular portion 40 and can pass into the tank. However, in the event that the pressure at the top end 15 of the housing 10 increases, the disc 110 will be forced downwards to effect the seal against the valve seat 30 and thus no air or toxic hydrocarbons can escape past this disc 110. A generally U-shaped retaining clip 130 is attached to the bottom of the disc 110 by a suitable screw 150, the clip including a plug which has a flange which actually abuts against the valve seat 30. The clip 130 is biassed so as to press across a diameter of the tubular portion 40, in order to ensure that the disc 110, during movement, does not become tilted with respect to the horizontal. The lower ends of the clip 130 extend radially outwards so as to engage the lowermost end of the tubular postion 40, so as to limit the vertical movement of the disc 110 and thereby prevent it from being withdrawn entirely from the housing 10 and into a storage tank during use.

An exhaust check valve disc 120 rests, in a similar fashion, on valve seat 70. As before, there is approximately 4.75 mm clearance between the periphery of the disc 120 and the tube 80 which surrounds the disc 120. The disc 120 may move upwards and downwards within the tube 80 under the influence of forces acting upon it. As before, a generally U-shaped retainer clip 140 is attached to the bottom of disc 120 by a suitable screw 160 or other device so as to limit upwards travel of the disc 120 within the tube 80. Here again, the clip includes a flange portion which is the element which actually abuts against the valve seat 70. A thickened portion 55 of the pipe 50, which thickened portion 55 extends radially inwards towards the interior 60 of the pipe 50, serves the same purpose as does tubular portion 40, allowing the horizontal orientation of the disc 120 to be maintained during movement thereof while preventing excessive upwards vertical movement of the disc 120 by the outwardly extending ends of the clip 140 striking against the thickened portion 55.

An increased pressure at the top end 15 of the housing 10 will be reflected on the lower surface of the exhaust check valve disc 120, since the interior 60 of the pipe 50 and the interior 2 of the housing 10 are in communication with each other. When the increased pressure at the top end 15 exceeds a predetermined threshold value, (i.e. overcomes the weight of disc 120) the disc 120 can move upwards within the tube 80 and air can pass between disc 120 and tube 80 and out of the perforations 90 to the ambient atmosphere. However, once the pressure at the top end 15 of the housing 10 is reduced, the disc 120 will drop downwards to effect the seal against the annular valve seat 70 and air is prevented from entering the interior 60 of the pipe 50.

Thus, disc 110 and valve seat 30 form an intake check valve which only allows air to enter the interior 2 of the housing, while disc 120 and valve seat 70 form an exhause check valve which only allows gas at a pressure equal to or greater than a predetermined threshold pressure to leave the interior 2 of the housing 10.

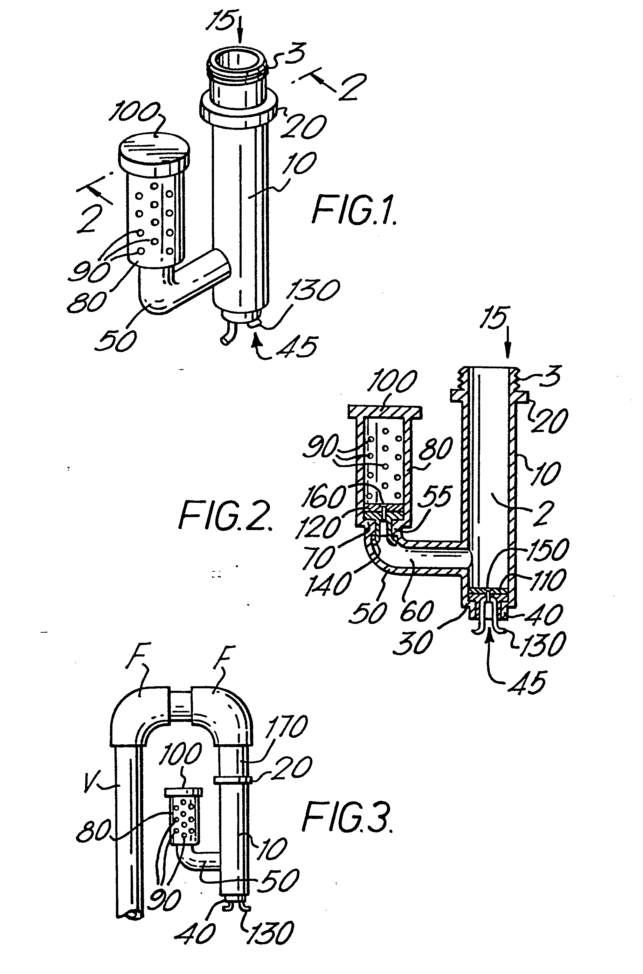

When as is shown in Fig. 3, the threads 3 are threaded into a fitting 170 that is attached to a vent pipe V via intermediate 90° elbows F, and the vent pipe V is connected to a fuel storage tank (not shown), this device serves as a suitable vacuum breaker and pressure release valve. When the storage tank is being filled, the pressure in the interior 2 of the housing 10 will increase sufficiently to force disc 120 upwards and allow gas under pressure to escape via perforations 90 to the atmosphere. However, in the event that low pressure fuel in the vapour phase evaporates within the tank, the pressure of this fuel will be insufficient to cause disc 120 to move and thus such low-pressure vapour will be prevented from escaping from the tank to the atmosphere. Those skilled in the art will readily perceive that the proper weight of the exhaust check valve disc 120 can be determined once the volume of the tank, the likely temperatures of the tank and its contents and other relevant parameters such as the length of the vent pipe V are known.

This invention also allows the contents of such a tank to be withdrawn easily therefrom. In the event that fuel is pumped out of the tank, disc 110 will be lifted upwards and air will thus be able to enter the tank to break any vacuum developed therein.

In order to provide sufficient corrosion resistance and a long and trouble-free service life, the valve seats 30 and 70 and the discs 110 and 120 may advantageously be manufactured of stainless steel, brass. bronze, or aluminium. If desired, the rest of the components of this device may also be manufactured of such materials, in order further to reduce corrosion during use.

While the invention has been illustrated and described as embodied in a vacuum breaker and pressure

- 8 -

release valve for use with a fuel storage tank, it is
intended that the valve of the present invention should
be applicable generally to use with vent pipes of any
storage tank which contains fluid in the liquid phase and
in the low pressure vapour phase.

- 9 -

CLAIMS:

1. A valve for use with an air vent pipe of a storage tank which contains fluid in the liquid phase and the low pressure vapour phase, the valve being arranged to open the vent pipe when the tank is being filled and emptied while keeping the vent pipe closed at other times in order to permit the liquid fluid in the tank to be drawn off and replenished and to prevent the gaseous fluid from escaping at other times, the valve comprising: a housing with an interior and an exterior, the housing being securable to the vent pipe in a manner such that the pipe communicates with the interior of the housing; an intake check valve comminucating with the interior of the housing, the intake check valve operating in a manner such that air is permitted to enter the interior of the housing through the intake check valve but is prevented from leaving the interior of the housing through the intake check valve; and an exhaust check valve communicating with the interior of the housing, the exhaust check valve operating in a manner such that gas which exceeds a predetermined threshold pressure is permitted to leave the interior of the housing through the exhaust check valve, but gas of a pressure less than the predetermined threshold pressure is prevented from leaving the interior of the housing through the exhaust check valve and air is prevented from entering the interior of the housing through the exhaust check valve.

2. A valve as claimed in claim 1, characterised in that the check valves include flat discs movable back and forth in hollow bores which communicate with the interior of the housing.

3. A valve as claimed in claim 2, characterised in that each bore has a top and a bottom, and each bore has an annular valve seat located at its bottom, each disc moving towards a corresponding valve seat to close the valve and moving away from the seat to open the valve.

4. A valve as claimed in claim 3, characterised in that each disc has a retaining clip secured thereto which extends through the corresponding valve seat.

5. A valve as claimed in claim 4, characterised in that each clip has outturned leg portions which act as stops engageable with portions of the housing to limit movement of the discs within the bores.

6. A valve as claimed in any of claims 2 to 5, characterised in that the discs are made of aluminium, brass, bronze or stainless steel.

7. A valve as claimed in any of claims 3 to 5, characterised in that the valve seats are made of aluminium, brass, bronze or stainless steel.

FIG.1.

FIG.2.

FIG.3.

## DOCUMENTS CONSIDERED TO BE RELEVANT

| Category | Citation of document with indication, where appropriate, of relevant passages | Relevant to claim |
|---|---|---|
| | <u>US - A - 1 918 807</u> (GLAB)<br>  * Page 1, line 59 - page 2, line 121 * | 1,2 |
| | <u>FR - A - 1 316 811</u> (VAREC)<br>  * In its entirety * | 1,2 |
| | <u>US - A - 2 526 019</u> (FOWLER)<br>  * In its entirety * | 1-3 |
| | <u>US - A - 1 669 739</u> (CLARK)<br>  * Page 1, line 55 - page 2, line 81 * | 1,2 |
| | <u>US - A - 2 028 754</u> (CRECCA)<br>  * Page 1, column 1, line 51 - page 2, column 1, line 69 * | 1 |

**CLASSIFICATION OF THE APPLICATION (Int. Cl. 3)**

F 16 K 17/194

**TECHNICAL FIELDS SEARCHED (Int.Cl. 3)**

F 16 K 17/00
B 65 D 90/00
B 63 J  2/00
B 63 B 57/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-09-1980 | VERELST |